# EUROPEAN PATENT SPECIFICATION

(11) **EP 0 298 660 B1**
(45) Date of publication and mention of the grant of the patent: **26.02.1997**
(21) Application number: 88305953.7
(22) Date of filing: 30.06.1988
(51) Int. Cl.: G06K 15/02, B41J 25/24

(54) **Printing apparatus operated by means of thermal energy**
Thermodrucker
Dispositif à imprimer par énergie thermique

(30) Priority: 06.07.1987 JP 166944/87
(43) Date of publication of application: 11.01.1989
(73) Proprietor: CANON KABUSHIKI KAISHA, Tokyo (JP)
(72) Inventor: Arakawa, Junichi, Yokohama-shi Kanagawa-ken (JP)
(74) Representative: Beresford, Keith Denis Lewis

(56) References cited:
- EP-A- 0 012 806
- EP-A- 0 181 949
- EP-A- 0 181 949
- FR-A- 2 588 212
- GB-A- 2 161 005
- US-A- 3 964 591
- Patent Abstracts of Japan, vol. 6, no. 210 (M-166) & JP-A-57 116 669

## Description

The present invention relates to a printing apparatus and font cartridges which can be attached to and detached from the apparatus.

It is known to provide a word processor or other electronic apparatus having a printer. A font memory is provided in the printer which contains a character font pattern corresponding to character codes in a train of data to be supplied to the printer. When the printer is supplied with a train of character codes, the individual codes are detected, the font memory is accessed to recover the font pattern corresponding to the character codes, and the printer is caused to print the characters in the desired font pattern.

Such a printer may be used with one or more font cartridges. In order to print a variety of different font patterns, a number of cartridges containing font patterns for different type styles may be provided, and a desired type style can be read and printed from a selected font cartridge in accordance with the character codes.

In printers whose printing heads operate by thermal energy such as thermal printers or bubble jet printers it is known in order to make the characters to be printed uniform that it is necessary to correct the amount of heat generated on the basis of the type style of the characters to be printed. A correction table is provided in which the amounts of heat to be generated are recorded, and the characters are printed using this table. Such a correction table is held in a memory on the control side of the printing apparatus.

Patents Abstracts of Japan, Vol. 6, No. 210 (M-166) and JP-A-57116669 disclose a printer having a thermal head, in which the drive time for the thermal head is determined depending upon the ambient temperature and the amount of heat which has accummulated within the head.

US-A-3964591 discloses a font selection system that is used in conjunction with an ink jet printer. Facilities are provided for storing data representing one or more fonts or character sets and for selecting these on a font basis or a character basis during printing operations. This known font selection system employs replaceable memories by which a number of droplets required for portions of the printing characters may be varied.

This invention is based on the realisation that a font cartridge can be used in association with printing apparatus, in which the printing head is operated by means of thermal energy and has a plurality of heater elements, without the need to provide large areas of memory on the control side of the printing apparatus that store correction tables for the many possible fonts, provided that each cartridge stores both data relating to the external font to be printed and also a correction table containing heat timing information for that external font.

The invention therefore provides printing apparatus having the features set out in claim 1.

How the invention may be put into effect will now be described, by way of example only, with reference to the accompanying drawings.

### BRIEF DESCRIPTION OF THE DRAWINGS

Fig. 1 is a block diagram for explaining an arrangement of a printing apparatus to and from which a font cartridge can be attached and detached according to an embodiment of the present invention;
Fig. 2 is a diagram for explaining a memory map in an external CGROM shown in Fig. 1;
Fig. 3 is a flowchart for explaining a print control procedure;
Figs. 4A to 4C are diagrams for explaining other memory maps in the external CGROM shown in Fig. 1; and
Fig. 5 is a diagram for explaining an arrangement of correction information storage areas which are stored in the external CGROM shown in Fig. 1.

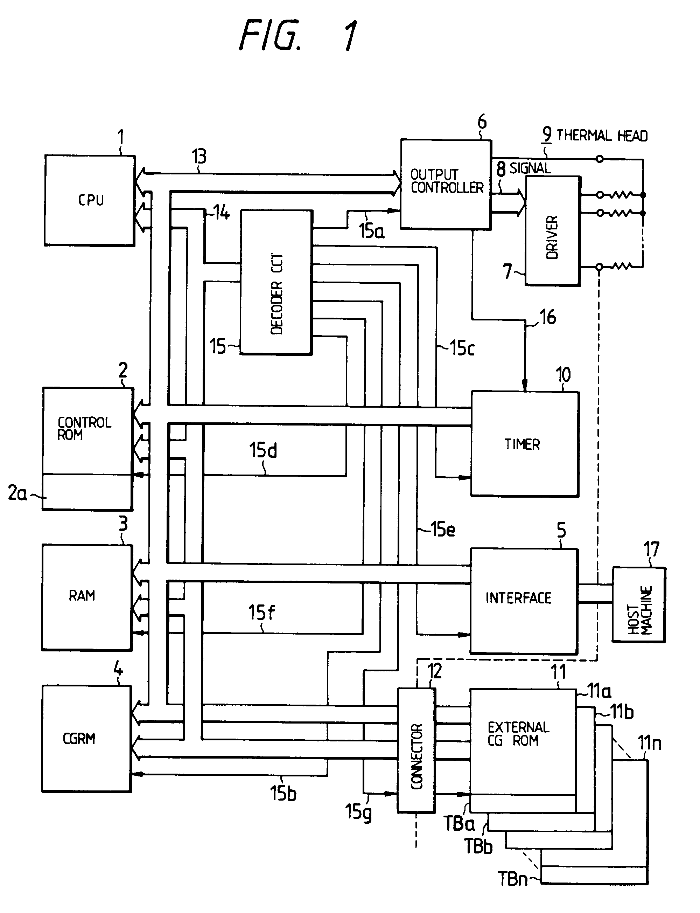

Fig. 1 is a block diagram for explaining an arrangement of a printing apparatus to and from which font cartridges 11 can be attached and detached. Reference numeral 1 denotes a CPU for executing various kinds of arithmetic operations and logic discriminating processes on the basis of control programs (including flowcharts which will be explained hereinlater) stored in a control ROM 2, thereby integrally controlling each section. The control ROM 2 has therein a correction table 2a to store print correction data for the character font patterns which are stored in a character generator ROM (CGROM) 4 provided in the apparatus. A RAM 3 functions as a work memory of the CPU 1 and temporarily stores, for example, printing data. An interface circuit 5 receives the data from a host machine 17. An output controller 6 transfers the printing data to a head driver (driver) 7 through a signal line 8 and controls a the width of voltage pulses to drive a thermal head 9. A timer circuit 10 gives the printing pulse width 16 to the output controller 6. Reference numeral 11 denotes an external CGROM group in the form of font cartridges. This diagram shows the case where external CGROMs 11a to 11n can be used for every type style. The external CGROMs 11a to 11n corresponding to the respective type styles have correction tables TBₐ to TBₙ to store correction information necessary to print the character font patterns for the respective type styles. The detachable external CGROMs 11a to 11n for the type styles are connected to the printing apparatus (a group of devices on the left side of the broken line in the diagram which is a boundary line) by a connector 12. The font patterns of the respective characters which are stored in the external CGROMs 11a to 11n and the information necessary to print the character font patterns for the type styles are read out in accordance with addresses from the CPU 1. Reference numeral 13 denotes a data bus; 14 is an address bus; and 15 is a decoder circuit. With reference to the address information on the address bus 14 connected to the CPU 1, the decoder circuit 15 generates: a decoder output 15a to enable the output controller 6; a decoder output 15b to enable the CGROM 4; a decoder output 15c to enable the timer circuit 10; a decoder output 15d to enable the control ROM 2; a decoder output 15e to enable the interface circuit 5; a decoder output 15f to enable the RAM 3; a decoder output 15g to enable the external CGROMs 11a to 11n; and the like.

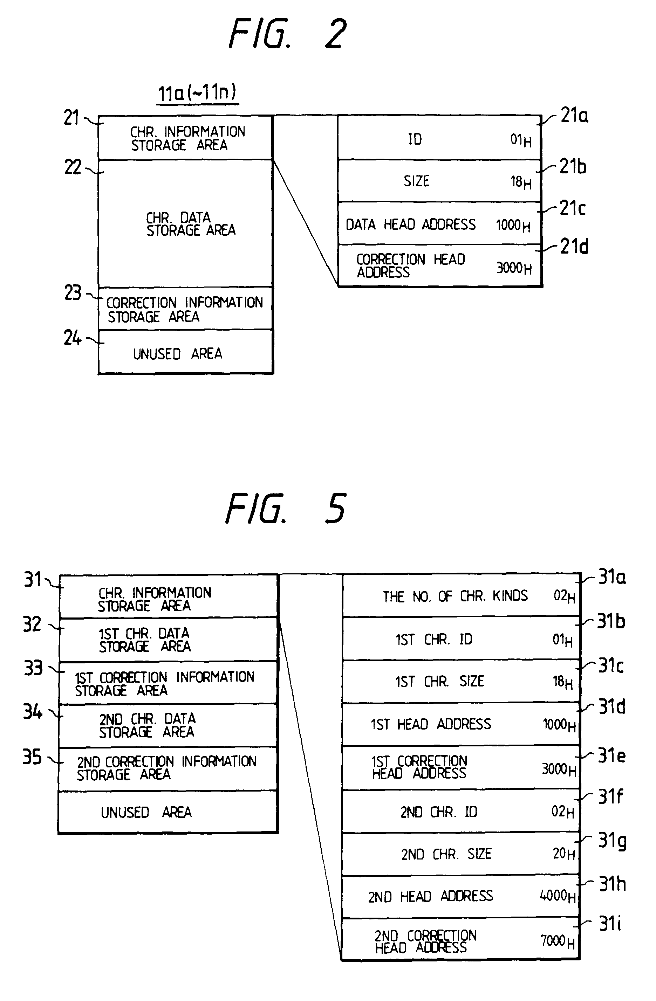

Fig. 2 is a diagram for explaining a memory map of the external CGROMs 11a to 11n shown in Fig. 1. Reference numeral 21 denotes a character information storage area. In this area, there are previously written: identification (ID) information 21a of the character type (type style), e.g., "01_{H}"; character size information 21b indicative of the number of data necessary to constitute one character, e.g., "18_{H}"; a head address 21c in a character data storage area 22, e.g., "1000_{H}"; a head address 21d in a correction information storage area 23, e.g., "3000_{H}"; and the like. Reference numeral 24 represents an unused area.

The operation will now be described.

When the print data and control data which are generated from the host machine 17 are received by the interface circuit 5, the CPU 1 reads out the character font pattern corresponding to the print data from the CGROM 4 or external CGROM 11 in accordance with the program stored in the control ROM 2 and temporarily stores it in RAM 3.

When the print data of one line are stored in RAM 3 or when a printing start instruction from the host machine 17 is received, the CPU 1 outputs the stored print data to the output controller 6 through the data bus 13. At the same time, the CPU 1 sets the printing period and printing pulse width into the timer circuit 10 (in the case of the CGROM 4, the correction information which is stored in the correction table 2a in the control ROM 2 is set; in the case of the external CGROMs 11a to 11n, the correction information which is stored in the correction tables TBₐ to TBₙ in the external CGROMs 11a to 11n is set). Thus, the printing pulse width control signal 16 is sent from the timer circuit 10 to the output controller 6. In response to this signal, the driver 7 is driven and the thermal head 9 is energized. The ink agent of the ink ribbon is coated onto a sheet (not shown). Thus, the character of a predetermined type style is printed.

In the case of using the font provided in the apparatus, the printing pulse width is output to the timer circuit 10 every bit with reference to the correction table 2a stored in the control ROM 2 in accordance with the ambient atmosphere temperature, the number of pattern data to be transmitted to the head, and the applied voltage.

On the other hand, when an external font is selected, in other words, when any one of the external CGROMs 11a to 11n is connected to the connector 12, the CPU 1 checks to see if the font cartridge which is set at present is the cartridge which has been designated by a command from the host machine 17 or by an operation panel (not shown) (which is provided in the printing apparatus main unit) by discriminating the ID information . 21a (e.g., "01_{H}") stored in the character information storage area 21. If it is determined that the present font cartridge coincides with the designated font cartridge, the data corresponding to the character code from the host machine 17 is read out from the appropriate one of the external CGROMs 11a to 11n with reference to the character size information 21b (e.g., "18_{H}") and head address 21c (e.g., "1000_{H}") of the character font data. The readout data is then written into the RAM 3 serving as a readout buffer memory. In the case of subsequently printing the data, the heat timing is determined on the basis of the correction information which is stored in one of the correction tables TBₐ to TBₙ after the head address 21b (e.g., "3000_{H}") in the correction-information storage area 23. The value of the decided heating time is sent to the timer circuit 10. Thus, the optimum heating time is set into the output controller 6 and driver 7 and the data is printed by the thermal head 9.

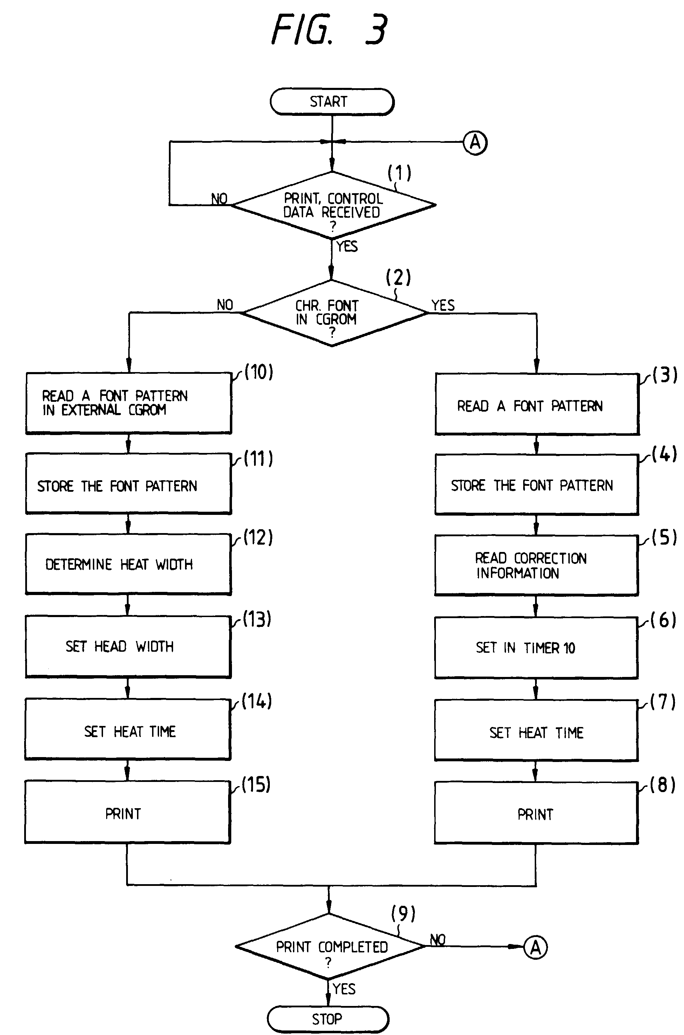

The printing control operation will now be described with reference to the flowchart in Fig. 3. Reference numerals (1) to (15) represent processing steps, respectively.

First, a check is made in step (1) to see if the print data and control data from the host machine 17 have been received or not. If YES, a check is made by reference to the ID information 21a to see if the character font for the received print data corresponds to the print font pattern to be stored in the CGROM 4 or not in step (2). If YES in step (2), the font pattern corresponding to the print character is read out of the CGROM 4 in step (3) and stored into the RAM 3 in step (4). Next, the correction information such as printing pulse width and the like for the character font stored in the RAM 3 is read out of the correction table 2a in the control ROM 2 in step (5) and set into the timer circuit 10 in step (6). Subsequently, the optimum pulse time is set into the output controller 6 and driver 7 in step (7). The printing is executed by the thermal head 9 in step (8).

In the next step (9), a check is made to see if the data has completely been printed or not. If NO, the processing routine is returned to step (1). If YES, the print control is finished.

On the other hand, if NO in step (2), the font pattern corresponding to the print character is read out from one of the external CGROMs 11a to 11n in step (10) and stored into the RAM 3 in step (11). The printing pulse width is determined in step (12) on the basis of the correction information which is stored in the correction tables TBₐ to TBₙ in the selected one of the external CGROMs 11a to 11n. The decided pulse width is set into the timer circuit 10 in step (13). Subsequently, the optimal pulse time is set into the output controller 6 and driver 7 in step (14). The printing is executed by the thermal head 9 in step (15). The processing routine is then returned to step (9).

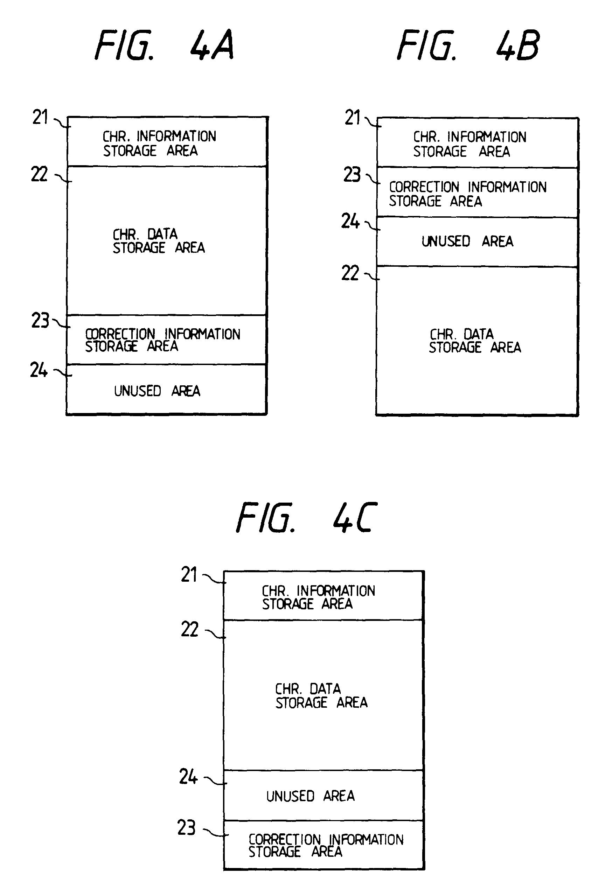

In the foregoing embodiment, the correction tables TBₐ to TBₙ of the external CGROMs 11a to 11n have been discussed with respect to the case where the head address 21d in the correction information storage area 23 which is stored into the character information storage area 21 is set to the fixed value of, e.g., "3000_{H}". However, as shown in Figs. 4A to 4C. the correction information storage area 23 can be also constituted so as to be arranged from an arbitrary address. In this case, the storage address is set into the head address 21d which is stored in the character information storage area 21.

The above embodiment has been described with respect to the case where only one correction information storage area 23 is assigned for each of the external CGROMs 11a to 11n. However, as shown in Fig. 5, the invention can be also applied to the case where a plurality of, e.g., two correction information storage areas 33 and 35 are provided for one external CGROM 11a.

Fig. 5 is a diagram for explaining an arrangement of the correction information storage areas which are stored in the external CGROM shown in Fig. 1. Reference numeral 31 denotes a character information storage area having: the number of character kinds information 31a; a first ID information area 31b; a first character size information area 31c; a first head address area 31d; a first correction information area 31e; a second ID information area 31f; a second character size information area 31g; a second head address area 31h; a second correction information area 31i; and the like.

Reference numeral 32 denotes a first character data storage area in which the first character font pattern is stored. Reference numeral 33 denotes a first correction information storage area which is designated by the first head address area 31d. The correction information of the character font pattern stored in the first character data storage area 32 is stored in the area 33. A second character data storage area 34 stores the second character font pattern. A second correction information storage area 35 is designated by the second head address area 31h and stores the correction information of the character font pattern stored in the second character data storage area 34.

As described above, the print correction information for each character font pattern based on a predetermined type style which is read out of the storage medium in accordance with a print request is arranged in a predetermined area of the storage medium. Therefore, the correction information which is necessary when printing the character font pattern, for an arbitrary type style which is read out of one of a plurality of font cartridges does not need to be provided in the printing apparatus itself. Therefore, the control load on the printing apparatus side can be significantly reduced, the correction information storage area which has conventionally been needed in the printing apparatus is released for other purposes within the printing apparatus, and a high quality printing of characters of each type style can be achieved.

## Claims

1. Printing apparatus comprising a printing head (9) operated by means of thermal energy and having a plurality of resistive heat elements, a head driver (7) for providing voltage pulses to the various resistive heat elements of the printing head under the control of a timer (10) which controls the width of the voltage pulses, a first memory (4) that stores a font supplied with the printer and a second memory (2a) which stores a table containing the heat timing information for the font supplied with the printer, the arrangement being such that when the supplied font is being printed the head driver (7) supplies voltage pulses whose width is determined in accordance with the information in the heat timing table for the font supplied with the printer, wherein there is connected to the printer a cartridge (11) which stores an external font for printing by the printer on command, characterised in that the cartridge also stores a heat timing table (TBa) for the external font, the arrangement being such that when the external font is being printed the head driver (7) supplies voltage pulses whose width is determined in accordance with the information in the heat timing table (TBa) for the external font.

2. The apparatus of claim 1, wherein the cartridge stores two external fonts 32, 34 and a heat timing table 33, 35 for each of the fonts.

## Patentansprüche

1. Druckervorrichtung mit einem mittels thermischer Energie betriebenen und eine Vielzahl von Heizwiderstandselementen aufweisenden Druckkopf (9), einem Kopftreiber (7) zum Anlegen von Spannungsimpulsen an die verschiedenen Heizwiderstandselemente des Druckkopfes unter Steuerung eines die Breite der Spannungsimpulse steuernden Zeitgebers (10), einem einen bei dem Drucker vorgesehenen Zeichentyp speichernden ersten Speicher (4), und einem eine die Heizzeitsteuerungsinformationen für den bei dem Drucker vorgesehenen Zeichentyp aufweisende Tabelle speichernden zweiten Speicher (2a), wobei die Anordnung derart ist, daß wenn der vorgesehene Zeichentyp gedruckt wird, der Kopftreiber (7) Spannungsimpulse zuführt, deren Breite entsprechend den Informationen in der Heizzeittabelle für den bei dem Drucker vorgesehenen Zeichentyp bestimmt ist, wobei eine Kassette (11) an den Drucker angeschlossen ist, die einen externen Zeichentyp speichert, der von dem Drucker auf Anweisung hin zu drucken ist,
**dadurch gekennzeichnet, daß**
die Kassette auch eine Heizzeitstezerungstabelle (TBa) für den externen Zeichentyp speichert, wobei die Anordnung derart ist, daß, wenn der externe Zeichentyp gedruckt wird, der Kopftreiber (7) Spannungsimpulse zuführt, deren Breite entsprechend den Informationen in der Heizzeitsteuerungstabelle (TBa) für den externen Zeichentyp bestimmt ist.

2. Vorrichtung nach Anspruch 1,
**dadurch gekennzeichnet, daß**
die Kassette zwei externe Zeichentypen 32, 34 speichert und eine Heizzeitsteuerungstabelle 33, 35 für jeden Zeichentyp speichert.

## Revendications

1. Appareil d'impression comprenant une tête (9) d'impression fonctionnant au moyen d'énergie thermique et ayant un ensemble d'éléments chauffants résistifs, un circuit (7) d'attaque de tête destiné à fournir des impulsions de tension aux divers éléments chauffants résistifs de la tête d'impression sous le contrôle d'un temporisateur (10) qui commande la largeur des impulsions de tension, une première mémoire (4) qui stocke une police de caractères fournie avec l'imprimante et une seconde mémoire (2a) qui stocke une table contenant les informations de cadencement de chauffage pour la police de caractères fournie avec l'imprimante, ce système étant tel que lorsque la police de caractères fournie est imprimée, le circuit (7) d'attaque de tête fournit des impulsions de tension dont la largeur est déterminée en fonction des informations contenues dans la table de cadencement de chauffage correspondant à la police de caractères fournie avec l'imprimante, dans lequel une cartouche (11) qui contient une police de caractères externe destinée à une impression sur ordre par l'imprimante, est connectée à l'imprimante, caractérisé en ce que la cartouche contient également une table (TBa) de cadencement de chauffage destinée à la police de caractères externe, le système étant tel que lorsque la police de caractères externe est imprimée, le circuit (7) d'attaque de tête fournit des impulsions de tension dont la largeur est déterminée en fonction des informations contenues dans la table (TBa) de cadencement de chauffage destinée à la police de caractères externe.

2. Appareil selon la revendication 1, dans lequel la cartouche contient deux polices (32, 34) de caractères externes et une table (33, 35) de cadencement de chauffage pour chacune des polices de caractères.
